# FASCICULE DE BREVET EUROPEEN

(11) **EP 3 891 092 B1**
(45) Date de publication et mention de la délivrance du brevet: **04.02.2026**
(21) Numéro de dépôt: 19868213.0
(22) Date de dépôt: 05.12.2019
(51) Int. Cl.: B66F 5/02, B25J 9/16, B66F 9/06, B25J 5/00, G05D 1/00

(54) **SYSTÈME COLLABORATIF DE MANUTENTION D'UNE CHARGE ET PROCÉDÉ DE COMMANDE D'UN TEL SYSTÈME**
KOLLABORATIVES SYSTEM ZUR HANDHABUNG EINER BELIEBIGEN LAST UND VERFAHREN ZUR STEUERUNG SOLCH EINES SYSTEMS
COLLABORATIVE SYSTEM FOR HANDLING ANY LOAD AND METHOD FOR CONTROLLING SUCH A SYSTEM

(30) Priorité: 06.12.2018 FR 1872431
(43) Date de publication de la demande: 13.10.2021
(73) Titulaire: JNOV TECH, 32600 Lias (FR)
(72) Inventeur: DUPEYRON, Nicolas, 31480 CAUBIAC (FR); COLAS, Rémy, 31470 FONSORBES (FR)
(74) Mandataire: Bringer IP
(86) Numéro de dépôt international: PCT/FR2019/052936
(87) Numéro de publication internationale: WO 2020/115441

(56) Documents cités:
- EP-A1- 2 913 731
- DE-C- 662 725
- JP-A- 2000 042 958
- KR-A- 20170 045 503
- US-A1- 2015 125 252
- US-A1- 2017 113 352
- HASHIMOTO M ET AL: "COORDINATIVE OBJECT-TRANSPORTATION BY MULTIPLE INDUSTRIAL MOBILE ROBOTS USING COUPLER WITH MECHANICAL COMPLIANCE", ROBOTICS, VISION AND SENSORS, SIGNAL PROCESSING AND CONTROL. MAUI, NOE. 15 - 19, 1993; [PROCEEDINGS OF THE INTERNATIONAL CONFERENCE ON INDUSTRIAL ELECTRONICS, CONTROL, AND INSTRUMENTATION (IECON)], NEW YORK, IEEE, US, vol. 3, 15 November 1993 (1993-11-15), pages 1577 - 1582, XP000437467

## Description

### 1. Domaine technique de l'invention

Le domaine technique de l'invention est celui de la manutention de charges, en particulier celui de la manutention collaborative de charges.

### 2. Arrière-plan technologique

Il existe de nombreuses situations, dans un contexte industriel, professionnel ou privé, où l'Homme est confronté au besoin de déplacer des charges, notamment des charges lourdes qui peuvent présenter des formes, dimensions et poids divers.

Pour répondre à ce besoin, il est aujourd'hui connu de recourir à des engins de manutention dédiés aux charges à manipuler.

Il s'agit par exemple de chariots élévateurs, de transpalettes, de gerbeurs, de grues mobiles, de ponts roulants, de portiques, de coussins d'air, de patins rouleurs, de tracteurs, etc.

Chacun de ces engins est dédié à un ou plusieurs types de charge prédéterminés et soumis à un certain nombre de limitations liées à son utilisation.

Par exemple, les transpalettes sont dédiés à la manutention de palettes de formes normalisées et ne peuvent être utilisées que dans des espaces peu encombrés et présentant des sols relativement plats pour permettre la manœuvrabilité des transpalettes.

Les systèmes à coussins d'air sont dédiés à la manutention de charges lourdes, telles que des machines-outils, et ne peuvent être utilisés que sur des sols parfaitement plats. En outre, ces systèmes imposent la présence d'un groupe pneumatique extérieur à fort débit d'air. En outre, les déplacements d'une charge lourde requièrent en général la présence de plusieurs opérateurs pour sécuriser la charge au cours du déplacement.

Les patins rouleurs sont dédiés à la manutention au sol de charges lourdes et ne peuvent être utilisés que sur des sols parfaitement plats et lisses, sans aspérité. En outre, les patins rouleurs imposent l'utilisation d'engins externes de levage de la charge, du type vérins hydrauliques, pour permettre de glisser les patins sous la charge et nécessitent l'utilisation d'engins de type tracteurs industriels pour la déplacer.

Les engins à conducteurs portés, tels que les chariots ou les grues sont encombrants et nécessitent la présence d'opérateurs qualifiés titulaires d'une habilitation particulière.

Les ponts roulants ou portiques sont dédiés au levage et au déplacement de charges lourdes de tous type suivant des itinéraires prédéterminés. A ce titre, les ponts roulants ne sont pas adaptés au déplacement de charges sur des itinéraires non prévus à l' avance. En outre, les ponts nécessitent des ancrages au sol et du personnel qualifié.

Il ressort donc que les différents systèmes de manutention actuellement connus présentent tous des limitations d'utilisation qui les rendent peu adaptés à d'autres types de charges ou à d'autres types d'environnement que ceux pour lesquels ils ont été conçus.

Les inventeurs ont donc cherché à développer un nouveau système de manutention qui permet de résoudre au moins certains des inconvénients des différents systèmes connus, et notamment un système qui soit adaptable à différents types de charges, d'environnements et/ou d'utilisation. US 2015/125252 A1 divulgue un système selon le preambule de la revendication 1.

### 3. Objectifs de l'invention

L'invention vise donc à fournir un système de manutention qui pallie au moins certains des inconvénients des systèmes connus.

L'invention vise en particulier à fournir, dans au moins un mode de réalisation de l'invention, un système collaboratif de manutention, qui peut s'adapter à différents types de charges, quels que soient son poids, sa géométrie et ses dimensions.

L'invention vise aussi à fournir, dans au moins un mode de réalisation, un système collaboratif de manutention qui peut être piloté par un seul opérateur, sans qualification particulière.

L'invention vise également à fournir, dans au moins un mode de réalisation, un système collaboratif de manutention, qui peut s'adapter à différents environnements et notamment à différents types de sol.

L'invention vise également à fournir, dans au moins un mode de réalisation de l'invention, un système collaboratif de manutention qui soit peu encombrant et/ou manuportable.

L'invention vise également à fournir, dans au moins un mode de réalisation de l'invention, un système collaboratif de manutention qui présente une manœuvrabilité améliorée par rapport aux systèmes connus, y compris dans les espaces restreints.

L'invention vise enfin à fournir un procédé de commande d'un système selon l'invention.

### 4. Exposé de l'invention

Pour ce faire, l'invention concerne un système collaboratif de manutention d'une charge quelconque sur une surface, dite surface de manutention, comprenant :
- une flotte de robots mobiles de manutention comprenant chacun un châssis, des organes de déplacement du châssis sur ladite surface de manutention selon une direction principale d'avancement, dite direction longitudinale, et des moyens de levage de ladite charge portés par ledit châssis et équipés d'un organe de préhension de ladite charge,
- une unité de commande configurée pour pouvoir fournir à un robot de ladite flotte, dit robot maître, des commandes, dites commandes de référence, desdits moyens de levage et desdits organes de déplacement de ce robot pour permettre la manutention de ladite charge,
- des moyens de synchronisation desdits robots configurés pour pouvoir fournir à chaque robot non maître de ladite flotte, dit robot esclave, des commandes, dites commandes dérivées, desdits moyens de levage et desdits organes de déplacement de ce robot esclave, déterminées à partir desdites commandes de référence dudit robot maître, pour permettre la manutention collaborative de ladite charge par ledit robot maître et lesdits robots esclaves synchronisés avec ledit robot maître.

Le système est caractérisé en ce que lesdits moyens de levage d'au moins un robot de manutention - notamment de chaque robot de manutention - comprennent un bras motorisé mobile, dit bras pivotant, portant ledit organe de préhension, ledit bras motorisé mobile étant pivotant par rapport audit châssis autour d'un axe transversal, dit axe de pivotement, qui s'étend perpendiculairement à ladite direction longitudinale, entre une position de prise dans laquelle il peut positionner ledit organe de préhension sous ladite charge et au moins une position de manutention dans laquelle il permet à l'organe de préhension de porter ladite charge au-dessus de ladite surface de manutention.

En d'autres termes, un système de manutention selon l'invention comprend un robot maître piloté par une unité de commande et des robots esclaves pilotés par des moyens de synchronisation des robots esclaves avec ledit robot maître.

Les robots d'un système selon l'invention collaborent les uns avec les autres pour permettre la manutention d'une charge quelconque. En d'autres termes, chaque robot du système supporte une partie de la charge à manutentionner de sorte que la coopération de l'ensemble des robots permette la manutention de la charge, quelle qu'elle soit.

Un système selon l'invention permet donc de déplacer des charges quelconques en synchronisant des robots esclaves à un robot maître, qui est lui-même piloté par une unité de commande. Cette unité de commande est par exemple une radio commande configurée pour pouvoir être en communication avec un récepteur porté par le robot maître. La radio commande est manipulée par un opérateur du système pour pouvoir fournir audit robot maître des consignes de déplacement et de levage. Les moyens de synchronisation du système selon l'invention permettent de dériver des consignes de déplacement et de levage adressées au robot maître, des consignes de déplacement et de levage de chacun des robots esclaves du système.

Aussi et selon l'invention, les robots maître et esclaves peuvent être agencés par un opérateur au voisinage de la charge à manutentionner puis cet opérateur pilote le robot maître par le biais de l'unité de commande pour lui transmettre des consignes de manutention, c'est-à-dire des consignes de levage et de déplacement. Les moyens de synchronisation déterminent alors les consignes de manutention de chacun des robots esclaves à partir des consignes du robot maître.

Un système selon l'invention peut donc s'adapter à tout type de charges à manutentionner en prévoyant autant de robot esclaves que nécessaire compte tenu de la charge à manutentionner. Un système selon l'invention n'est donc pas dédié à un type de charge spécifique. En outre, quel que soit le nombre de robots esclaves nécessaires pour la manutention de la charge considérée, le pilotage de la flotte de robots reste le même, à savoir le pilotage du robot maître, qui par le biais des moyens de synchronisation, pilote directement tous les robots esclaves. En d'autres termes, aucune modification du système n'est nécessaire pour passer de la manutention d'une charge nécessitant un nombre N prédéterminé de robots esclaves à la manutention d'une charge nécessitant un nombre M prédéterminé de robots esclaves.

Un système selon l'invention est donc adaptable à tous types de charges, tout en présentant un encombrement réduit par rapport aux systèmes de manutention de l'art antérieur.

Un système selon l'invention est également transportable manuellement par un opérateur dans la mesure où chaque robot de la flotte peut être porté par un opérateur. C'est la combinaison et la coopération des robots de la flotte entre eux qui permettent le déplacement d'une charge de toute nature, y compris une charge lourde et/ou encombrante.

Les charges étant portées par-dessous, la visibilité de la charge est totale, y compris au cours des opérations de prise et de charge.

Au moins un robot du système de manutention, et de préférence chaque robot du système de manutention comprend un bras mobile pivotant autour d'un axe de pivotement qui s'étend selon une direction, dite direction transversale, perpendiculaire à la direction longitudinale entre une position de prise et une position de manutention. Ce bras mobile est motorisé et son déplacement de la position de prise à la position de manutention résulte desdites commandes dérivées fournies par les moyens de synchronisation (dans le cas d'un robot esclave) ou des commandes de référence fournies par l'unité de commande (dans le cas du robot maître).

Le bras pivotant d'un robot d'un système selon l'invention permet de le glisser sous la charge pour assurer la prise. Cela autorise en outre de ne pas travailler en porte à faux et d'assurer la stabilité de la charge. Cet aspect de l'invention permet également de réduire la masse des robots.

Le pivotement du bras motorisé autour de l'axe de pivotement est engendré par le déplacement d'un ou plusieurs éléments mobiles, par exemple en rotation, en translation ou en suivant un chemin de came (par exemple bielle, came etc.). L'axe de pivotement peut correspondre à un élément réel du système (par exemple une jonction pivot) ou être virtuel du fait de la combinaison de déplacement d'éléments mobiles.

Avantageusement et selon l'invention, ledit bras pivotant est configuré de sorte qu'en position de prise, ledit organe de préhension s'étend à moins de 80mm de ladite surface de manutention, avantageusement à moins de 50mm de ladite surface de manutention, de manière à permettre la prise de la charge au ras du sol.

Selon cette variante avantageuse, le bras est configuré pour pouvoir être, dans la position de prise, au ras du sol, sous la charge, éventuellement plus basse que le robot.

Selon l'invention, ledit bras pivotant d'au moins un robot de manutention - notamment de chaque robot de manutention - est configuré de telle sorte qu'en position de manutention, ledit organe de préhension s'étend à l'aplomb du centre d'inertie desdits organes de déplacement de ce robot, de manière à pouvoir faire tourner ce robot sur lui-même, lorsque ledit bras pivotant est dans ladite position de manutention, et assurer un déplacement omnidirectionnel de ce robot, tout en maintenant la charge.

Selon cette caracteristique, l'organe de préhension peut s'étendre à l'aplomb du centre d'inertie des organes de déplacement en position de manutention. Aussi, le robot peut pivoter sur lui-même autour de l'axe qui s'étend de l'organe de préhension au centre d'inertie des organes de déplacement du robot, dit axe d'aplomb, pour changer l'orientation du robot de manutention et assurer des déplacements omnidirectionnels de ce dernier, tout en maintenant la charge. De préférence, l'organe de préhension est monté sur le bras pivotant par le biais d'un pivot vertical, ce qui permet au robot de pivoter autour de l'axe d'aplomb, tout en maintenant l'organe de préhension en prise sur la charge. Cette aptitude au pivotement de l'organe de préhension est par exemple obtenue par l'intermédiaire d'un moyeu qui porte l'organe de préhension. Le moyeu est en outre monté pivotant autour d'un axe transversal.

Un système selon l'invention permet donc la manutention de charges dans des espaces fortement encombrés ou dans des espaces réduits, en permettant aux robots de pivoter sur eux-mêmes tout en maintenant la charge, ce qui n'était pas possible avec les engins dédiés de l'art antérieur, tels que les transpalettes (ou tout autre système tracté) qui nécessitent des grands espaces pour pouvoir être manœuvrées, à la fois lors de la saisie de la charge à manutentionner et lors de l'orientation de la transpalette dans la direction du déplacement visé.

En outre, les robots d'un système selon l'invention pouvant pivoter sur eux-mêmes, une fois en position de manutention, il n'est pas nécessaire d'aligner les robots lors de leur positionnement initial sous la charge. Une fois positionnés par un opérateur, les robots peuvent s'aligner automatiquement en pivotant sur eux-mêmes pour suivre la trajectoire imposée par le robot maître.

Avantageusement et selon l'invention, ledit organe de préhension d'au moins un robot de manutention - notamment de chaque robot de manutention - est monté pivotant sur ledit bras motorisé mobile autour d'un axe transversal de manière à pouvoir maintenir une orientation horizontale dudit organe de préhension lors du pivotement du bras mobile entre ladite position de prise de ladite charge et une position de manutention de ladite charge.

Selon cette variante, l'orientation horizontale de l'organe de préhension peut être maintenue lors du pivotement du bras mobile de la position de prise à la position de manutention.

Avantageusement et selon l'invention, ledit bras motorisé mobile d'au moins un robot de manutention - notamment de chaque robot de manutention - est équipé de moyens de montage amovible dudit organe de préhension de manière à pouvoir changer l'organe de préhension en fonction de la charge à manutentionner par ce robot.

Des robots d'un système selon cette variante permettent d'adapter les organes de préhension des robots au type de charge à manutentionner.

Ainsi, un tel organe de préhension peut être un patin d'appui par adhérence pour les charges à surface de prise plane et horizontale, une bride pour les charges équipées d'anneaux de bridage, d'aimants pour les charges métalliques, de fourches pour les charges équipées de logements de réception de fourches, telles que des palettes, etc.

Les moyens de montage amovible de ces différents organes de préhension peuvent être de tous types. Il peut s'agir de moyens aimantés, de moyens vissés, de moyens d'encastrement, etc.

Avantageusement et selon l'invention, ledit bras motorisé mobile comprend un actionneur rotatif (du type moteur électrique) relié mécaniquement à une vis à billes porté par un palier monté pivotant par rapport audit châssis et comprenant un écrou à tourillon solidaire dudit bras pivotant de manière à ce que la mise en rotation de ladite vis par ledit actionneur rotatif entraîne un déplacement en translation dudit écrou à tourillon qui assure le pivotement dudit bras pivotant.

Selon ce mode de réalisation, le bras motorisé d'au moins un robot de manutention - notamment de chaque robot de manutention - comprend une vis à billes porté par un palier monté pivotant par rapport au châssis. Cela permet à la vis de pivoter lors du levage du bras mobile.

Selon d'autres modes de réalisation, en particulier pour les très fortes charges, c'est-à-dire les charges de plus de 2000 kg, la vis à billes peut être remplacée par une vis à rouleaux satellites. Selon d'autres modes de réalisation, la vis à billes peut être remplacée par un vérin hydraulique.

Selon l'invention, lesdits moyens de levage d'au moins un robot de manutention - notamment de chaque robot de manutention - sont synchronisés auxdits organes de déplacement de ce robot de sorte que ladite charge puisse être élevée selon un axe parfaitement vertical.

Les robots selon cette variante permettent d'assurer un levage vertical de la charge, les organes de déplacement du robot pouvant se déplacer en fonction du pivotement du bras motorisé des moyens de levage. En outre, cet aspect de l'invention permet aux robots de passer sous une charge qui est plus basse qu'eux.

Avantageusement et selon l'invention, lesdits organes de déplacement du châssis d'au moins un robot de manutention - notamment de chaque robot de manutention - comprennent deux roues motrices commandées chacune de manière indépendante et agencées de part et d'autre d'un axe longitudinal.

Selon cette variante avantageuse, les organes de déplacement du robot comprennent des roues motrices commandées de manière indépendante. Ainsi, chaque roue motrice peut être commandée de manière indépendante par un variateur pour réaliser l'asservissement en vitesse et position de chaque roue de sorte que le robot puisse être orienté par différentiel de vitesses entre les deux roues.

Selon d'autres variantes, les organes de déplacement peuvent comprendre des chenilles ou tout moyen équivalent permettant de déplacer le châssis du robot sur la surface de manutention.

Avantageusement et selon l'invention, chaque roue motrice comprend un moteur sans balais et sans cadre logé directement dans la roue.

Un robot selon cette variante avantageuse est compact et léger, ce qui facilite notamment sa portabilité par un opérateur.

Avantageusement et selon l'invention, lesdits organes de déplacement d'au moins un robot de manutention - notamment de chaque robot de manutention - comprennent en outre un galet, dit galet avant, porté par ledit châssis et agencé au droit de l'organe de préhension en position de prise, et des roulettes, dites roulettes arrières, portées par le châssis et agencées à l'opposé du galet avant.

Un robot selon cette variante permet aisément de déplacer le robot à vide pour sa mise en place sous la charge par la combinaison des roues motrices agencées à l'avant du robot et les roulettes agencées à l'arrière du robot. En outre, le galet avant assure une fonction antichute de la charge, en cas de déséquilibre du robot.

Avantageusement et selon l'invention, lesdits moyens de synchronisation comprennent :
- des moyens de détermination par le robot maître de la position et de l'orientation de chaque robot esclave par rapport au robot maître et aux autres robots esclaves du système comprenant au moins un capteur de position et au moins un capteur d'orientation portés par chaque robot,
- des moyens de calcul desdites commandes dérivées de chaque robot esclave à partir desdites positions et orientations déterminées par lesdits moyens de détermination, lesdits moyens de calcul étant embarqués dans un microcontrôleur du robot maître.

Selon cette variante avantageuse, le système comprend au moins un capteur de position monté sur chaque robot configuré pour déterminer la position de ce robot par rapport au robot maître et aux autres robots esclaves du système. Avantageusement, cette position est déterminée par triangulation ou trilatération. Ce capteur est par exemple un capteur à ultrason, un laser, un capteur radio ultra large bande (plus connu sous l'acronyme anglais UWB pour « *Ultra Wide Band* »), une caméra ou tout moyen équivalent configuré pour pouvoir repérer les autres robots du système de manutention et fournir des mesures de position et de distance par rapport à ces robots. Chaque robot comprend également un capteur d'orientation, par exemple une boussole numérique, un codeur, etc., configuré pour déterminer l'orientation du robot de manière à pouvoir déterminer un repère local de chaque robot et définir un cap de déplacement.

La position de chacun des robots est donc déterminée automatiquement par le robot maître en fonction des informations de position reçues par chaque robot esclave, ce qui permet le calcul des commandes dérivées de chaque robot esclave par les moyens de calcul embarqués dans un microcontrôleur du robot maître.

Avantageusement et selon l'invention, lesdits moyens de synchronisation sont configurés pour pouvoir mesurer en temps réel, au cours du déplacement de ladite charge par ladite flotte de robots, l'équilibre de la charge par la mesure de la distance qui sépare chaque robot au cours du déplacement de ladite charge et la répartition du poids entre chaque robot en fonction des déplacements verticaux de chaque robot, compensés par une action sur lesdits moyens de levage.

Un système selon cette variante permet de compenser, au cours du déplacement de la charge, tout défaut de surface, en adaptant la position des moyens de levage à l'état de surface.

Avantageusement et selon l'invention, chaque robot de ladite flotte comprend en outre une centrale inertielle configurée pour fournir à un microcontrôleur des mesures de déplacement, vitesse et accélération de ce robot.

Un système selon cette variante permet de monitorer et gérer l'équilibre du robot en déterminant à chaque instant le déplacement, la vitesse et l'accélération du robot. Elle permet en outre de mesurer les déplacements verticaux du robot et donc de compenser les défauts de surface par l'intermédiaire des moyens de levage, comme indiqué précédemment. Ces mesures sont avantageusement enrichies d'une mesure du poids de la charge par l'utilisation de capteur de force à jauge de contrainte ou par mesure directe du courant du moteur électrique des moyens de levage, de manière à pouvoir maintenir une répartition satisfaisante du poids à chaque instant.

La centrale inertielle permet de garantir le maintien de la charge à l'aplomb des roues, même lorsque le bras pivotant des moyens de levage est actionné pour compenser des défauts de surface.

Avantageusement et selon l'invention, chaque robot de ladite flotte comprend des moyens de communication sans fil avec les autres robots de ladite flotte.

Cette variante avantageuse permet aux robots de communiquer entre eux par le biais d'un système de communication sans fil. Ces moyens de communication sans fil permettent notamment au robot maître de fournir aux robots esclaves les instructions de déplacement et de levage. Ces moyens de communications sans fil permettent également la transmission des mesures des capteurs de position, de la centrale inertielle, du capteur d'orientation, des capteurs d'effort le cas échéant et des courants moteurs.

L'invention concerne également un procédé de commande d'un système collaboratif de manutention d'une charge quelconque selon l'invention.

Un procédé selon l'invention comprend au moins les étapes suivantes :
- les robots dudit système sont positionnés par un opérateur sous ladite charge à manutentionner,
- ledit robot maître identifie chaque robot esclave et détermine la position et l'orientation de chacun desdits robots esclaves,
- des commandes, dites commandes de référence, desdits moyens de levage et desdits organes de déplacement du robot maître sont envoyées au robot maître,
- des commandes, dites commandes dérivées, desdits moyens de levage et desdits organes de déplacement de chaque robot esclave sont déterminées par lesdits moyens de synchronisation, à partir desdites commandes de référence dudit robot maître, pour permettre la manutention collaborative de ladite charge par ledit robot maître et lesdits robots esclaves synchronisés avec ledit robot maître.

Les avantages d'un système de manutention selon l'invention s'appliquent *mutatis mutandis* à un procédé de commande d'un système selon l'invention.

L'invention concerne également un système de manutention et un procédé de commande d'un tel système de manutention caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'un système collaboratif de manutention d'une charge selon un mode de réalisation de l'invention,
- la figure 2 est une vue schématique de profil d'un robot d'un système collaboratif de manutention d'une charge selon un mode de réalisation de l'invention, le robot étant en position de prise,
- la figure 3 est une vue schématique de profil d'un robot d'un système collaboratif de manutention d'une charge selon un mode de réalisation de l'invention, le robot étant en position de manutention,
- la figure 4 est une vue schématique en perspective de dessous d'un robot d'un système collaboratif de manutention d'une charge selon un mode de réalisation de l'invention, le robot étant en position de prise,
- la figure 5 est une vue schématique en coupe longitudinale d'un robot d'un système collaboratif de manutention d'une charge selon un mode de réalisation de l'invention, le robot étant en position de prise,
- la figure 6a est une vue schématique en coupe longitudinale d'un robot d'un système collaboratif de manutention d'une charge selon un mode de réalisation de l'invention, le robot étant en position de prise d'une charge,
- la figure 6b est une vue schématique de profil d'un robot d'un système collaboratif de manutention d'une charge selon un mode de réalisation de l'invention, le robot étant en position de prise d'une charge,
- la figure 7a est une vue schématique en coupe longitudinale d'un robot d'un système collaboratif de manutention d'une charge selon un mode de réalisation de l'invention, le robot étant en position intermédiaire entre la position de prise d'une charge et la position de manutention de la charge,
- la figure 7b est une vue schématique de profil d'un robot d'un système collaboratif de manutention d'une charge selon un mode de réalisation de l'invention, le robot étant en position intermédiaire entre la position de prise d'une charge et la position de manutention de la charge,
- la figure 8a est une vue schématique en coupe longitudinale d'un robot d'un système collaboratif de manutention d'une charge selon un mode de réalisation de l'invention, le robot étant en position de manutention d'une charge,
- la figure 8b est une vue schématique de profil d'un robot d'un système collaboratif de manutention d'une charge selon un mode de réalisation de l'invention, le robot étant en position de manutention d'une charge,
- la figure 9 est une vue schématique des différentes positions prises par un robot d'un système selon un mode de réalisation au cours d'un déplacement sur une surface présentant des défauts de surface,
- la figure 10 est une vue schématique fonctionnelle d'un robot d'un système collaboratif de manutention d'une charge selon un mode de réalisation de l'invention,
- la figure 11a est une vue schématique d'une première étape de commande d'un système collaboratif de manutention d'une charge selon un mode de réalisation de l'invention,
- la figure 11b est vue schématique d'une deuxième étape de commande d'un système collaboratif de manutention d'une charge selon un mode de réalisation de l'invention,
- la figure 11c est une vue schématique d'une troisième étape de commande d'un système collaboratif de manutention d'une charge selon un mode de réalisation de l'invention.

### 6. Description détaillée d'un mode de réalisation de l'invention

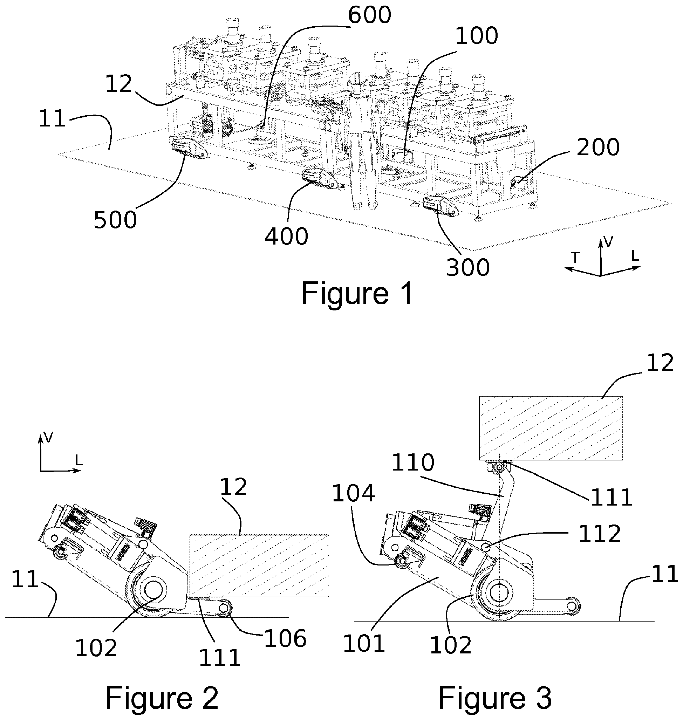

Sur les figures, les échelles et les proportions ne sont pas strictement respectées et ce, à des fins d'illustration et de clarté. Dans toute la description détaillée qui suit en référence aux figures, sauf indication contraire, chaque élément du système selon l'invention est décrit tel qu'il est agencé lorsque le système est en cours de manutention d'une charge quelconque. Cet agencement est représenté notamment sur la figure 1.

En outre, les éléments identiques, similaires ou analogues sont désignés par les mêmes références dans toutes les figures. Enfin, les termes longitudinal, transversal et vertical sont utilisés à titre non limitatif en référence au trièdre L, T, V tel que représenté sur la figure 1. La direction longitudinale correspond à la direction principale d'avancement d'un robot du système selon l'invention, c'est à dire la direction perpendiculaire à l'axe des roues motrices. La direction verticale est la direction définie par la gravité. La direction transversale est la direction perpendiculaire à la direction longitudinale et à la direction verticale. C'est la direction dans laquelle s'étend l'axe de pivotement du bras de levage d'un robot de manutention d'un système collaboratif selon l'invention.

Un système collaboratif de manutention d'une charge 12 selon l'invention comprend, tel que représenté sur la figure 1 une flotte de robots 100, 200, 300, 400, 500, 600 mobiles de manutention d'une charge.

On considère dans la suite que le robot 100 est un robot maître et que les autres robots sont des robots esclaves. La description des robots est faite par rapport au robot 100, étant entendu que l'architecture des autres robots est identique, sauf mention contraire.

Ainsi, le robot 100 comprend un châssis 101, des organes de déplacement du châssis sur une surface 11 de manutention et des moyens de levage.

Les organes de déplacement et les moyens de levage vont être décrits ci-après en détail en lien avec les figures 2 à 8b. Sur ces figures, la charge 12 est schématiquement représentée par un bloc hachuré et seul un robot est représenté. En pratique, la charge est maintenue par au moins deux robots (de préférence au moins trois) qui coopèrent ensemble pour permettre la manutention de cette charge. Ainsi, si l'on regarde la figure 2, la charge 12 est maintenue à au moins une autre de ces extrémités non représentée sur la figure par un robot identique au robot représenté sur la figure. C'est la coopération de ces différents robots qui permet de maintenir la charge 12 en équilibre et sa manutention.

### Organes de déplacement du châssis

Les organes de déplacement du châssis 101 sont formés, selon le mode de réalisation des figures de roues motrices 102, 103.

Ces roues motrices 102, 103 sont par exemples des roues équipées d'un moteur sans balais ou d'un moteur à courant continu à aimant permanent alimenté par des batteries portées par le châssis 101 et non représentées sur les figures. Un réducteur à renvoi d'angle peut également être prévu entre le moteur et les roues motrices.

Selon un autre mode de réalisation, chaque roue motrice 102, 103 comprend un moteur sans balais et sans cadre, plus connu sous la dénomination anglaise de moteur « *frameless* » directement intégré dans la roue, avec ou sans réducteur. Ce moteur sans balais peut être du type « *inrunner* » (rotor à l'intérieur), « *outrunner* » (rotor à l'extérieur) ou « pancake » (rotor axial).

Le moteur est alors équipé d'un capteur de position du type codeur afin de pouvoir récupérer une information de position de la roue et d'assurer l'asservissement en vitesse et en position. Chaque roue motrice est pilotée de manière indépendante par un variateur pour permettre le déplacement du robot dans toutes les directions.

Chaque roue motrice 102, 103 comprend de préférence un revêtement (aussi désigné par le terme de bandage) adapté à la typologie du sol de manutention 11. Ces bandages sont par exemple des bandages polyuréthanes pour les sols intérieurs et des bandages pneumatiques pour les sols extérieurs.

Les organes de déplacement comprennent également des roulettes arrières 104, 105, en rotation libre autour d'un axe transversal, de manière à faciliter le déplacement à vide du robot lors de sa mise en place sous la charge à manutentionner.

Les organes de déplacement comprennent enfin un galet 106 avant qui facilite le déplacement du robot lorsque ce dernier est en position de prise de charge. Ce galet 106 forme également un dispositif antichute du robot, en cas de perte d'équilibre.

### Moyens de levage

Les moyens de levage de chaque robot du système collaboratif comprennent un bras motorisé mobile, dit bras pivotant 110, qui porte un organe de préhension 111 de la charge à manutentionner.

Le bras pivotant 110 est configuré pour pouvoir pivoter par rapport au châssis 101 autour d'un axe transversal 112, entre une position de prise dans laquelle il peut positionner l'organe de préhension 111 sous la charge 12 et au moins une position de manutention dans laquelle il permet à l'organe de préhension 111 de porter la charge 12 au-dessus de la surface de manutention 11.

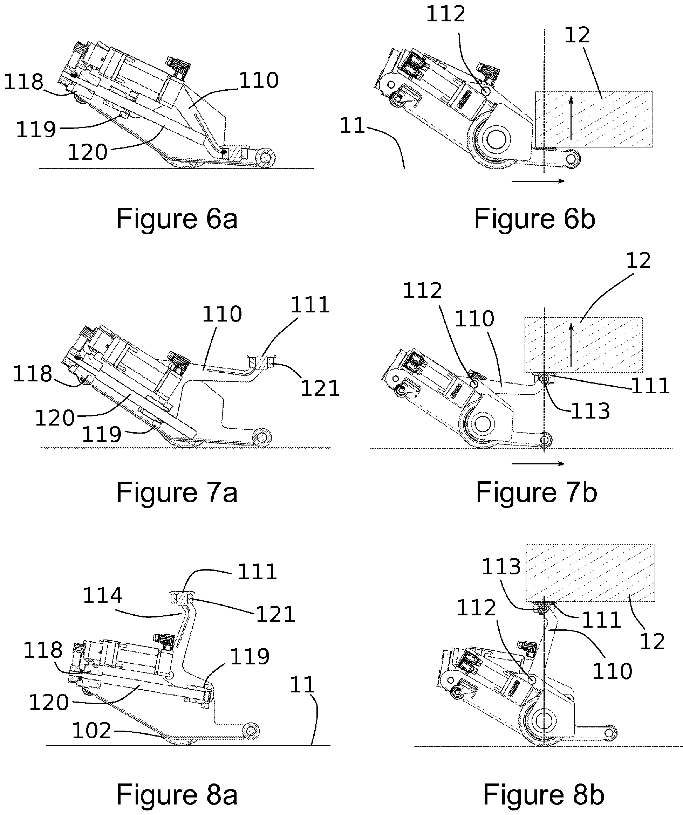

Les figures 6a et 6b illustrent le bras pivotant 110 dans la position de prise de la charge 12 et les figures 8a et 8b illustrent le bras pivotant 110 dans la position de manutention de la charge 12. Les figures 7a et 7b illustrent le bras pivotant dans une position intermédiaire entre la position de prise et la position de manutention. Sur les figures 6a, 7a et 8a en coupe, la charge 12 n'est pas représentée. L'objet de ces figures est d'illustrer le déplacement du tourillon 119 le long de la vis 120 et du pivotement du palier 118 et du bras pivotant 110 lors du déplacement de l'organe de préhension 111 de la position de prise à la position de manutention.

L'organe de préhension 111 est de préférence monté pivotant par rapport au bras pivotant 110 autour d'un axe 113 de manière à ce qu'il puisse maintenir une orientation horizontale lors du pivotement du bras mobile de la position de prise de la charge 12 à la position de manutention de la charge.

En outre, l'organe de préhension 111 est monté de manière amovible sur le bras pivotant 112 de sorte qu'il soit possible de changer l'organe de préhension en fonction du type de charge à manutentionner. Ce montage amovible peut être obtenu par des moyens conjugués de vissage, d'aimantation, d'encastrement, etc., portés respectivement par le bras 112 pivotant et par l'organe de préhension 111.

Tel que représenté sur la figure 8a notamment, le bras pivotant 112 du robot est configuré pour qu'en position de manutention, l'organe de préhension 111 s'étende à l'aplomb du centre d'inertie des roues 102, 103 du robot. En outre, l'organe de préhension 111 est monté pivotant dans un moyeu 121 autour d'un axe vertical. Ce moyeu vertical est lui-même monté pivotant autour de l'axe transversal 113. Cette configuration particulière permet au robot de pivoter sur lui-même autour de l'axe 114 vertical qui s'étend de l'organe de préhension 111 au centre d'inertie des roues 102, 103. Cette aptitude au pivotement autour de cet axe 114 permet d'orienter le robot dans toutes les directions, y compris lorsque le robot maintient la charge 12 au-dessus de la surface de manutention 11. Cette aptitude au pivotement du robot, en position de manutention, est renforcée par le montage de l'organe de préhension 111 sur le bras pivotant 110 par le biais du moyeu 121 monté pivotant autour de l'axe transversal 113. En d'autres termes, l'organe de préhension 111 peut pivoter autour de l'axe 114 en position de manutention par rapport au bras 110.

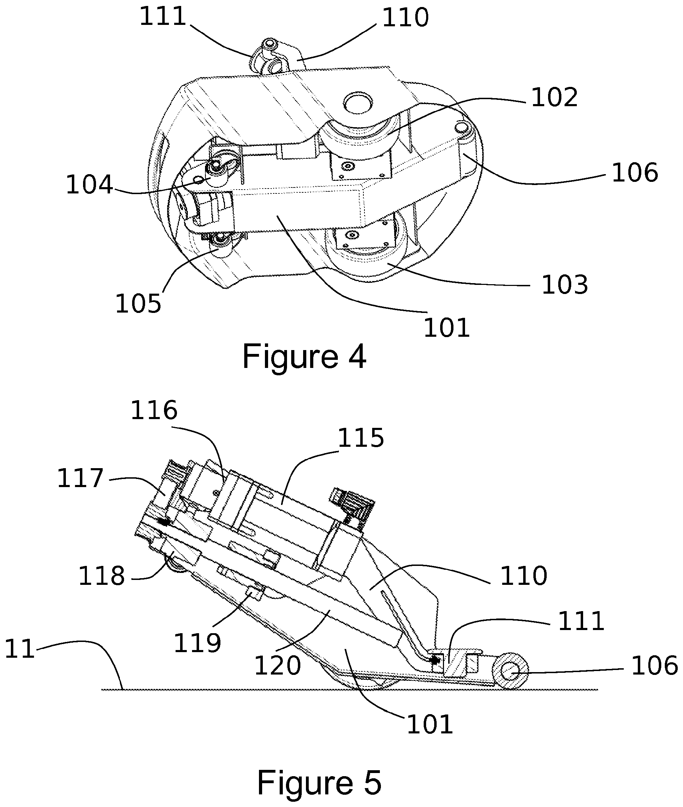

Selon le mode de réalisation des figures, particulièrement apparent sur la figure 5, les moyens de levage comprennent en outre un actionneur rotatif, tel qu'un moteur électrique 115 qui entraine le bras pivotant 110 par l'intermédiaire d'un réducteur 116 et d'un ensemble poulie/courroie 117 en prise avec une vis à billes 120 équipée d'un écrou à tourillon 119. Cet actionneur rotatif est avantageusement équipé d'un codeur permettant son asservissement en vitesse et en position et d'un frein à manque d'énergie permettant d'assurer la sécurité du système et d'éviter la chute de la charge en cas d'arrêt d'urgence.

La vis 120 à billes est maintenue par un palier 118 monté pivotant sur le châssis 101 de telle sorte que le bras puisse être pivoté par rapport au châssis lors du passage du bras de la position de prise à la position de manutention.

Selon ce mode de réalisation de l'invention, la vis à billes permet d'obtenir un bon rendement (supérieur à 85%) tout en limitant l'usure des pièces, ce qui réduit les besoins de maintenance.

Selon un autre mode de réalisation, la vis à billes peut être remplacée par une vis à rouleaux satellites ou tout moyen équivalent.

Selon un autre mode de réalisation non représenté sur les figures, l'actionnement du bras pivotant peut être obtenu par un vérin hydraulique à pompe manuelle ou tout moyen équivalent.

Dans le cas où plus de trois robots sont utilisés pour la manutention d'une charge, la cinématique de levage est hyperstatique. Il est alors nécessaire de garantir une répartition homogène de la masse de la charge sur chaque robot du système. Cette répartition peut être obtenue par la mesure du courant moteur du moteur électrique 115. Le courant mesuré est l'image du couple de la vis et donc de l'effort appliqué sur l'organe de préhension 111 par la charge en bout du bras pivotant 110. Un capteur de force, du type à jauge de contrainte, peut également être utilisé pour assurer une répartition satisfaisante du poids de la charge à chaque instant.

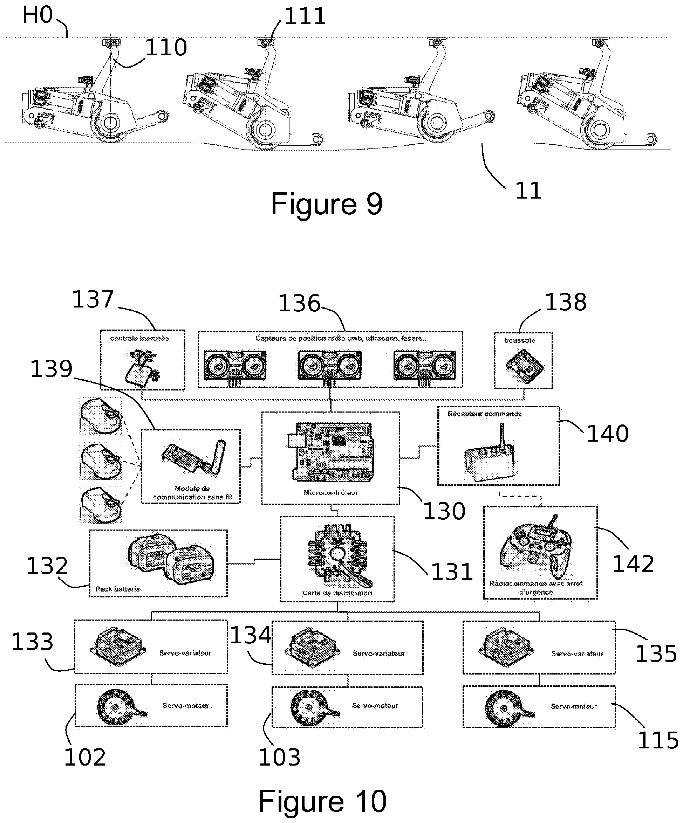

La figure 9 illustre schématiquement la capacité d'un robot d'un système selon un mode préférentiel de réalisation de l'invention à compenser les défauts de la surface de manutention 11.

En particulier, le robot permet d'adapter la position des moyens de levage et sa position en fonction des imperfections du sol. Comme on l'observe sur la figure 9, le bras pivotant 110 pivote en fonction des variations verticales du sol pour que la position de l'organe de préhension 111 puisse être maintenue à une hauteur constante H0 quelle que soit les déplacements verticaux du robot induits par les variations de la surface de manutention 111. Aussi, un robot selon l'invention permet de compenser, au cours du déplacement de la charge, tout défaut de surface, en adaptant la position des moyens de levage à l'état de surface.

### Autres moyens des robots

La figure 10 illustre de manière schématique et fonctionnelle les autres organes pouvant équiper un robot d'un système collaboratif de manutention selon un mode de réalisation de l'invention.

En particulier, le robot 100 comprend de préférence un microcontrôleur 130 configuré pour coordonner les différentes fonctionnalités du robot.

Ce microcontrôleur 130 est relié à une carte de distribution 131 des énergies de puissance et de commande du robot. Cette carte est alimentée par les batteries 132 électriques. Comme indiqué précédemment, ces batteries sont par exemple des batteries amovibles portées par le châssis 101 du robot.

La carte de distribution 131 est reliée aux différents moteurs électriques du robot, en particulier le moteur 115 des moyens de levage et les moteurs électriques des roues 102, 103 des organes de déplacement. Des servo-variateurs 133, 134, 135 peuvent en outre être prévus entre la carte de distribution 131 et les différents moteurs électriques du robot pour assurer les asservissements en vitesse et position par la mesure des courants moteurs et position codeur.

Chaque robot comprend en outre des capteurs de position 136, dits capteurs de géolocalisation, configurés pour déterminer la position du robot par rapport aux autres robots du système. Ces capteurs de position sont par exemple des capteurs à ultrasons émetteurs et récepteurs et/ou des lasers infrarouges et/ou des capteurs radios à ultra large bande (UWB).

Chaque robot comprend également un capteur 138 d'orientation et une centrale inertielle 137.

Enfin, chaque robot comprend un module 139 de communication sans fil avec les autres robots du système. Ce module de communication sans fil peut être de tous types. Il peut par exemple s'agir d'un module de communication sans fil du type onde radio à 433MHz ou d'un réseau du type WiFi, ZigBee, Bluetooth ou tout réseau équivalent.

En outre, chaque robot comprend un récepteur 140 de commande pour recevoir les commandes de levage et de déplacement.

Un système selon l'invention comprend un robot maître configuré pour recevoir des commandes de référence depuis une unité de commande et une pluralité de robots esclaves configurés pour recevoir des commandes du robot maître, ces commandes étant dérivées des commandes reçues par le robot maître.

Pour ce faire, un opérateur définit les commandes de levage et de déplacement sur une unité de commande par l'intermédiaire d'une interface de commande, par exemple une radio-télécommande 142.

Ces consignes sont envoyées au récepteur 140 du robot maître.

Le microcontrôleur 130 du robot maître convertit les consignes de commande reçues en consigne de déplacement unitaire de chaque robot (aussi désignées dans tout le texte par commandes dérivées), en fonction de la position de chaque robot, déterminée à partir des informations de position, et d'orientation fournies par chaque robot esclave.

Ces commandes dérivées sont transmises par le biais du module de communication 139 du robot maître à destination des modules de communication des robots esclaves qui transmettent ces consignes à leur microcontrôleur associé.

Chaque microcontrôleur de chaque robot distribue les informations reçues au différents servo-variateurs pour piloter les moteurs électriques des moyens de levage et de déplacement.

Au cours des déplacements des différents robots, chaque robot envoie au robot maître, à intervalle de temps prédéterminé, des informations de position et d'orientation de manière à ce que le microcontrôleur 130 du robot maître puisse modifier, si nécessaire, les commandes de déplacement et de levage des robots esclaves et de lui-même.

Le robot maître est également de préférence équipé d'un module d'arrêt pour arrêter l'ensemble de la manutention en cas de problème décelé sur l'un ou l'autre des robots de manutention.

Selon une variante avantageuse, le système est également équipé d'un bouton d'arrêt d'urgence disponible sur l'organe de commande hébergeant l'unité de commande du système.

Le système selon l'invention comprend également des moyens de synchronisation des différents robots. Ces moyens de synchronisation comprennent les moyens de détermination de la position et de l'orientation de chaque robot esclave par rapport aux autres robots du système formés du capteur 136 de position et du capteur 138 d'orientation portés par chaque robot. Le capteur 138 d'orientation est par exemple une boussole numérique, un codeur, etc.

Ces moyens de synchronisation comprennent également le microcontrôleur du robot maître. Ce microcontrôleur du robot maître embarque également les moyens de calcul des commandes dérivées de chaque robot esclave à partir des positions et orientations de chacun des robots esclaves. Ces moyens de calcul prennent par exemple la forme d'un module logiciel embarqué sur le microcontrôleur.

En d'autres termes, les moyens de synchronisation d'un système selon l'invention sont de préférence formés par une combinaison d'éléments matériels (capteurs de position, capteur d'orientation, centrale inertielle, capteur de force) et de moyens logiciels (module de calcul des commandes dérivées, etc.).

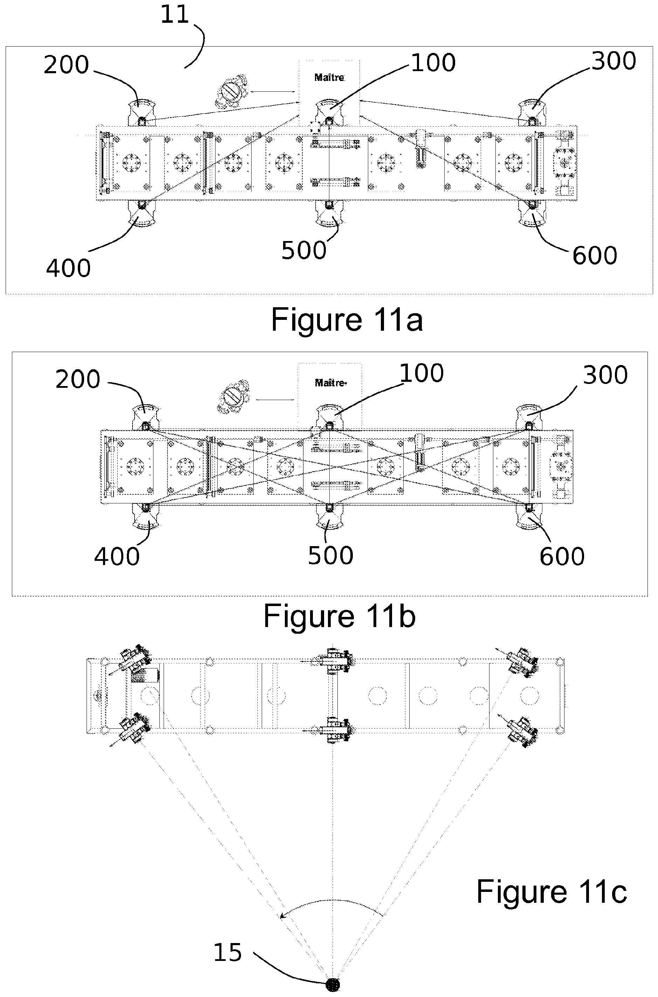

Les figures 11a, 11b, 11c illustrent de manière schématique le principe de commande d'un système selon l'invention.

Sur la figure 11a, les robots 100, 200, 300, 400, 500 et 600 ont été positionnés par un opérateur sous la charge 12 à manutentionner.

Le robot maître 100 identifie l'ensemble des robots esclaves pour permettre leur synchronisation.

L'opérateur peut ensuite transmettre au robot maître des consignes de déplacement et de levage.

Les bras pivotants des différents robots sont alors actionnés pour pouvoir passer leur organe de préhension respectifs de la position de prise à la position de manutention. L'action de levage est de préférence synchronisée au déplacement des roues pour permettre une élévation verticale de la charge.

Le robot maître 100 contrôle la bonne répartition de charge.

La figure 11b illustre l'étape de triangulation (ou trilatération) permettant au robot maître d'identifier la géométrie de déplacement du système. Cette géométrie est déterminée par la mesure des différentes distances entre les robots qui résultent de la lecture des mesures issues des capteurs de position et de du capteur d'orientation de chaque robot.

La figure 11c illustre de manière schématique une étape de déplacement de la charge qui résulte de l'actionnement par l'opérateur d'un joystick de l'unité de commande. Par exemple, la figure 11c illustre une opération de rotation de la charge autour du pointé référencé 15. Chaque robot est alors commandé par le robot maître selon une direction spécifique pour permettre à l'ensemble de pivoter autour de ce point 15. Chaque robot reçoit une commande de déplacement qui lui est propre et qui dépend de sa position initiale et son orientation initiale.

Un système selon l'invention permet ainsi de déplacer tous types de charge, sans difficulté en commandant les déplacements d'un robot maître, qui pilote à son tour les déplacements des robots esclaves.

Les robots d'un système selon l'invention sont manuportables. En particulier, les robots sont configurés pour présenter un poids total compris entre 3kg et 30 kg selon les versions. Chaque robot est configuré pour être capable de déplacer des charges de 50kg à 2500 kg. Ainsi, la collaboration de plusieurs robots permet le déplacement de charges de 100 kg à 25 000 kg par collaboration de deux à dix robots.

Les robots sont configurés pour pouvoir élever une charge qui présente une prise à moins de 80mm du sol, de préférence à moins de 50mm du sol et pour élever cette charge à une hauteur comprise entre 100 mm et 500 mm selon la gamme de robot.

Bien entendu, ces valeurs ne sont données qu'à titre d'exemple et l'homme du métier perçoit aisément qu'il est possible de concevoir des robots présentant d'autres spécifications en fonction des organes équipant lesdits robots.

Un système collaboratif de manutention d'une charge selon l'invention peut être utilisé pour tous types d'applications et permet de remplacer à lui seul les différents engins actuellement utilisés pour des opérations de manutention (transpalettes, gerbeurs, grues mobiles, ponts roulants, portiques, coussins d'air, patins rouleurs, tracteurs, etc).

L'invention ne se limite pas uniquement aux modes de réalisation décrits en lien avec les figures.

Ainsi, selon d'autres modes de réalisation non décrits, un gant ou une paire de gants peut être également utilisé pour commander les robots en poussant ou tirant directement sur la charge à déplacer. Ces gants sont équipés d'une transmission radio avec le robot maître pour assurer la communication des ordres de commande.

Les gants intègrent par exemple un ou plusieurs capteurs de distance similaires à ceux qui équipent les robots esclaves pour pouvoir être géolocalisés par le robot maître. Ce système permet ainsi d'orienter les roues des robots selon la position du pilote qui porte le(s) gant(s) afin de déplacer la charge selon l'orientation voulue.

Ces gants peuvent également être équipés de capteurs sensoriels qui permettent de commander la vitesse et le sens de déplacement des robots en fonction de la pression appliquée par le pilote sur la charge.

Une centrale inertielle intégrant des accéléromètres peut également être intégrée dans les gants afin de choisir entre plusieurs modes de pilotage (translation, rotation, courbe, vitesse rapide, vitesse lente...) en réalisant un geste prédéfini par exemple. Des boutons capacitifs souples sélectionnables peuvent également équiper ces gants.

Selon certaines variante, ce système peut être couplé à d'autres paires de gants afin de pouvoir piloter les charges encombrantes à plusieurs personnes.

## Revendications

1. Système collaboratif de manutention d'une charge (12) quelconque sur une surface, dite surface de manutention (11), comprenant :
- une flotte de robots (100 ; 200 ; 300 : 400 ; 500 ; 600) mobiles de manutention comprenant chacun un châssis (101), des organes de déplacement du châssis sur ladite surface de manutention (11) selon une direction principale d'avancement, dite direction longitudinale, et des moyens de levage de ladite charge portés par ledit châssis (101) et équipés d'un organe de préhension (111) de ladite charge (12),
- une unité de commande (142) configurée pour pouvoir fournir à un robot de ladite flotte, dit robot maître (100), des commandes, dites commandes de référence, desdits moyens de levage et desdits organes de déplacement de ce robot pour permettre la manutention de ladite charge (12),
- des moyens de synchronisation (130, 136, 138, 139) desdits robots configurés pour pouvoir fournir à chaque robot non maître de ladite flotte, dit robot esclave (200 ; 300 ; 400 ; 500 ; 600) des commandes, dites commandes dérivées, desdits moyens de levage et desdits organes de déplacement de ce robot esclave, déterminées à partir desdites commandes de référence dudit robot maître (100), pour permettre la manutention collaborative de ladite charge (12) par ledit robot maître (100) et lesdits robots esclaves (200 ; 300 ; 400 ; 500 ; 600) synchronisés avec ledit robot maître,
le système étant **caractérisé en ce que** lesdits moyens de levage d'au moins un robot (100) de manutention comprennent un bras motorisé mobile, dit bras (110) pivotant, portant ledit organe de préhension (111), ledit bras motorisé mobile (110) étant pivotant par rapport audit châssis (101) autour d'un axe transversal, dit axe de pivotement (112), qui s'étend perpendiculairement à ladite direction longitudinale, entre une position de prise dans laquelle il peut positionner ledit organe de préhension (111) sous ladite charge (12) et au moins une position de manutention dans laquelle il permet à l'organe de préhension (111) de porter ladite charge au-dessus de ladite surface de manutention (11), ledit bras pivotant (112) d'au moins un robot (100) de manutention étant configuré de telle sorte qu'en position de manutention, ledit organe de préhension (111) s'étende à l'aplomb du centre d'inertie desdits organes de déplacement de ce robot, de manière à pouvoir faire tourner ce robot sur lui-même, lorsque ledit bras pivotant (110) est dans ladite position de manutention, et assurer un déplacement omnidirectionnel de ce robot, tout en maintenant la charge, lesdits moyens de levage d'au moins un robot (100) de manutention étant synchronisés auxdits organes de déplacement de ce robot de sorte que ladite charge puisse être élevée selon un axe parfaitement vertical.

2. Système selon la revendication 1, **caractérisé en ce que** ledit bras pivotant est configuré de sorte qu'en position de prise, ledit organe de préhension s'étend à moins de 80mm de ladite surface de manutention, avantageusement à moins de 50mm de ladite surface de manutention, de manière à permettre la prise de la charge au ras du sol.

3. Système selon l'une des revendications 1 à 2, **caractérisé en ce que** ledit organe de préhension (111) d'au moins un robot (100) de manutention est monté pivotant sur ledit bras (110) motorisé mobile autour d'un axe (113) transversal de manière à pouvoir maintenir une orientation horizontale dudit organe de préhension (111) lors du pivotement du bras (110) mobile entre ladite position de prise de ladite charge et une position de manutention de ladite charge.

4. Système selon l'une des revendications 1 à 3, **caractérisé en ce que** ledit bras (110) motorisé mobile d'au moins un robot (100) de manutention est équipé de moyens de montage amovible dudit organe de préhension (111) de manière à pouvoir changer l'organe de préhension en fonction de la charge à manutentionner par ce robot.

5. Système selon l'une des revendications 1 à 4, **caractérisé en ce que** ledit bras (110) motorisé mobile comprend un actionneur rotatif (115) relié mécaniquement à une vis (120) à billes porté par un palier (118) monté pivotant par rapport audit châssis (101) et comprenant un écrou (119) à tourillon solidaire dudit bras (110) pivotant de manière à ce que la mise en rotation de ladite vis (120) par ledit actionneur rotatif (115) entraine un déplacement en translation dudit écrou (119) à tourillon qui assure le pivotement dudit bras (110) pivotant.

6. Système selon l'une des revendications 1 à 5, **caractérisé en ce que** lesdits organes de déplacement du châssis d'au moins un robot de manutention comprennent deux roues (102 ; 103) motrices commandées chacune de manière indépendante et agencées de part et d'autre d'un axe longitudinal.

7. Système selon la revendication 6, **caractérisé en ce que** chaque roue (102 ; 103) motrice comprend un moteur sans balais et sans cadre logé directement dans la roue.

8. Système selon l'une des revendications 1 à 7, **caractérisé en ce que** lesdits organes de déplacement d'au moins un robot (100) de manutention comprennent en outre un galet, dit galet (106) avant, porté par ledit châssis (101) et agencé au droit de l'organe de préhension (111) en position de prise, et des roulettes, dites roulettes (104 ; 105) arrières, portées par le châssis (101) et agencées à l'opposé du galet (106) avant.

9. Système selon l'une des revendications 1 à 8, **caractérisé en ce que** lesdits moyens de synchronisation comprennent :
- des moyens de détermination par le robot maître de la position et de l'orientation de chaque robot esclave par rapport au robot maître et aux autres robots esclaves du système comprenant au moins un capteur (136) de position et au moins un capteur (138) d'orientation portés par chaque robot esclave,
- des moyens de calcul desdites commandes dérivées de chaque robot esclave à partir desdites position et orientation déterminées par lesdits moyens de détermination, lesdits moyens de calcul étant embarqués dans un microcontrôleur du robot maître.

10. Système selon la revendication 9, **caractérisé en ce que** la position de chaque robot par rapport au robot maître et aux autre robots esclaves du système est déterminée par triangulation ou trilatération.

11. Système selon l'une des revendications 9 ou 10, **caractérisé en ce que** lesdits moyens de synchronisation sont configurés pour pouvoir mesurer, à intervalle de temps prédéterminé, au cours du déplacement de ladite charge (12) par ladite flotte de robots, l'équilibre de la charge par la mesure de la distance qui sépare chaque robot (100 ; 200 ; 300 ; 400 ; 500 ; 600) au cours du déplacement de ladite charge (12) et la répartition du poids entre chaque robot en fonction des déplacements verticaux de chaque robot, compensés par une action sur lesdits moyens de levage.

12. Système selon l'une des revendications 1 à 11, **caractérisé en ce que** chaque robot (100 ; 200 ; 300 ; 400 ; 500 ; 600) de ladite flotte comprend en outre une centrale (137) inertielle configurée pour fournir à un microcontrôleur (130) des mesures de déplacement, vitesse et accélération de ce robot.

13. Système selon l'une des revendication 1 à 12, **caractérisé en ce que** chaque robot de ladite flotte comprend des moyens (139) de communication sans fil avec les autres robots de ladite flotte.

14. Procédé de commande d'un système collaboratif de manutention d'une charge quelconque selon l'une des revendications 1 à 13 comprenant les étapes suivantes :
- les robots (100 ; 200 ; 300 ; 400 ; 500 ; 600) dudit système sont positionnés par un opérateur sous ladite charge à manutentionner,
- ledit robot maître (100) identifie chaque robot esclave (200 ; 300 ; 400 ; 500 ; 600) et détermine la position et l'orientation de chacun desdits robots esclaves,
- des commandes, dites commandes de référence, desdits moyens de levage et desdits organes de déplacement du robot maître (100) sont envoyées au robot maître,
- des commandes, dites commandes dérivées, desdits moyens de levage et desdits organes de déplacement de chaque robot esclave sont déterminées par lesdits moyens de synchronisation, à partir desdites commandes de référence dudit robot maître, pour permettre la manutention collaborative de ladite charge par ledit robot maître et lesdits robots esclaves synchronisés avec ledit robot maître.

## Patentansprüche

1. Kollaboratives System zum Handhaben beliebiger Lasten (12) auf einer Oberfläche, die als Handhabungsfläche (11) bezeichnet wird, welches umfasst:
einer Flotte mobiler Handhabungsroboter (100; 200; 300: 400; 500; 600), die jeweils ein Fahrgestell (101), Bewegungselemente zum Bewegen des Fahrgestells auf der Handhabungsfläche (11) in einer Hauptfahrrichtung, Längsrichtung genannt, und Mittel zum Anheben der vom Fahrgestell (101) getragenen Last umfassen und mit einem Greifelement (111) für die Last (12) ausgestattet sind,
eine Steuereinheit (142), die ausgestaltet ist, einem Roboter in der Flotte, dem sogenannten Master-Roboter (100), Befehle, sogenannte Referenzbefehle, für die Hebevorrichtung und die Bewegungselemente dieses Roboters zu liefern, um die Handhabung der Last (12) zu ermöglichen,
Synchronisationsmittel (130, 136, 138, 139) für die Roboter, die ausgestaltet sind, jedem Nicht-Master-Roboter der Flotte, Slave-Roboter (200; 300; 400; 500; 600) genannt, Befehle, die abgeleiteten Befehle, für die Hebevorrichtung und die Bewegungsvorrichtung des Slave-Roboters zu liefern, die aus den Referenzbefehlen des Master-Roboters (100) bestimmt werden, um die gemeinsame Handhabung der Last (12) durch den Master-Roboter (100) und die Slave-Roboter (200; 300; 400; 500; 600) zu ermöglichen, die mit dem Master-Roboter synchronisiert sind,
worin das System **dadurch gekennzeichnet ist, dass** die Hebevorrichtung mindestens eines Handhabungsroboters (100) einen beweglichen motorisierten Arm, einen sogenannten Schwenkarm (110), umfasst, der das Greifelement (111) trägt, worin der bewegliche motorisierte Arm (110) relativ zum Fahrgestell (101) um eine Querachse, der sogenannten Schwenkachse (112), die senkrecht zur Längsrichtung verläuft, zwischen einer Greifposition, in der er das Greifelement (111) unter der Last (12) positionieren kann, und mindestens einer Handhabungsposition schwenkbar ist, in der er es dem Greifelement (111) ermöglicht, die Last über der Handhabungsfläche (11) zu tragen, worin der Schwenkarm (112) mindestens eines Handhabungsroboters (100) ausgestaltet ist, dass sich das Greifelement (111) in der Handhabungsposition vertikal über den Trägheitsmittelpunkt der Bewegungselemente dieses Roboters erstreckt, um diesen Roboter um sich selbst drehen zu können, wenn sich der Schwenkarm (110) in der Handhabungsposition befindet, und eine omnidirektionale Bewegung dieses Roboters unter Beibehaltung der Last zu gewährleisten, wobei die Hebevorrichtung mindestens eines Handhabungsroboters (100) mit den Bewegungselementen dieses Roboters synchronisiert ist, so dass die Last entlang einer perfekt vertikalen Achse angehoben werden kann.

2. System nach Anspruch 1, **dadurch gekennzeichnet, dass** der Schwenkarm ausgestaltet ist, dass sich das Greifelement in der Greifposition weniger als 80 mm von der Handhabungsfläche, vorteilhafterweise weniger als 50 mm von der Handhabungsfläche, erstreckt, um die Last nahe am Boden greifen zu können.

3. System nach einem der Ansprüche 1 bis 2, **dadurch gekennzeichnet, dass** das Greifelement (111) mindestens eines Handhabungsroboters (100) schwenkbar an dem motorisierten Arm (110) angebracht ist, der um eine Querachse (113) schwenkbar angebracht ist, um eine horizontale Ausrichtung des Greifelements (111) aufrechtzuerhalten, wenn der bewegliche Arm (110) zwischen der Lastgreifposition und einer Last-Handhabungsposition schwenkt.

4. System nach einem der Ansprüche 1 bis 3, **dadurch gekennzeichnet, dass** der motorisierte Arm (110) mindestens eines Handhabungsroboters (100) mit Mitteln zur lösbaren Befestigung des Greifelements (111) ausgestattet ist, um das Greifelement entsprechend der von diesem Roboter zu handhabenden Last austauschen zu können.

5. System gemäß einem der Ansprüche 1 bis 4, **dadurch gekennzeichnet, dass** der bewegliche motorisierte Arm (110) einen Drehantrieb (115) umfasst, der mechanisch mit einer Kugelumlaufspindel (120) verbunden ist, die von einem Lager (118) getragen wird, das so montiert ist, dass es relativ zu dem Fahrgestell (101) schwenkbar ist, und eine Mutter (119) umfasst, die mit dem schwenkbaren Arm (110) einstückig ist, so dass die Drehung der Schraube (120) durch den Drehantrieb (115) eine Translationsbewegung der Schwenkmutter (119) bewirkt, die das Schwenken des schwenkbaren Arms (110) gewährleistet.

6. System nach einem der Ansprüche 1 bis 5, **dadurch gekennzeichnet, dass** die Bewegungselemente zum Bewegen des Fahrgestells mindestens eines Handhabungsroboters zwei Antriebsräder (102; 103) umfassen, die jeweils unabhängig voneinander gesteuert werden und auf beiden Seiten einer Längsachse angeordnet sind.

7. System nach Anspruch 6, **dadurch gekennzeichnet, dass** jedes Antriebsrad (102; 103) einen bürstenlosen, rahmenlosen Motor umfasst, der direkt im Rad untergebracht ist.

8. System nach einem der Ansprüche 1 bis 7, **dadurch gekennzeichnet, dass** die Bewegungselemente mindestens eines Handhabungsroboters (100) ferner eine Rolle umfassen, als vordere Rolle (106) bezeichnet, die von dem Fahrgestell (101) getragen wird und gegenüber dem Greifelement (111) in der Greifposition angeordnet ist, sowie Lenkrollen umfasst, als hintere Lenkrollen (104; 105) bezeichnet, die vom Fahrgestell (101) getragen werden und gegenüber der vorderen Rolle (106) angeordnet sind.

9. System nach einem der Ansprüche 1 bis 8, **dadurch gekennzeichnet, dass** die Synchronisationsmittel umfassen:
Mittel für den Master-Roboter, um die Position und Ausrichtung jedes Slave-Roboters relativ zum Master-Roboter und den anderen Slave-Robotern im System zu bestimmen, umfassend mindestens einen Positionssensor (136) und mindestens einen Ausrichtungssensor (138), die von jedem Slave-Roboter getragen werden,
Mittel zum Berechnen der abgeleiteten Befehle für jeden Slave-Roboter aus der von den Bestimmungsmitteln bestimmten Position und Ausrichtung, worin die Berechnungsmittel in einen Mikrocontroller des Master-Roboters eingebettet sind.

10. System nach Anspruch 9, **dadurch gekennzeichnet, dass** die Position jedes Roboters relativ zum Master-Roboter und den anderen Slave-Robotern im System durch Triangulation oder Trilateration bestimmt wird.

11. System gemäß einem der Ansprüche 9 oder 10, **dadurch gekennzeichnet, dass** die Synchronisationsmittel ausgestaltet sind, in der Lage zu sein, während der Bewegung der Last (12) durch die Roboterflotte in einem vorbestimmten Zeitintervall das Gleichgewicht der Last zu messen, indem sie den Abstand zwischen jedem Roboter (100; 200; 300; 400; 500; 600) während der Bewegung der Last (12) und die Gewichtsverteilung zwischen jedem Roboter als Funktion der vertikalen Bewegungen jedes Roboters, kompensiert durch eine Wirkung auf die Hebevorrichtung, zu messen.

12. System nach einem der Ansprüche 1 bis 11, **dadurch gekennzeichnet, dass** jeder Roboter (100; 200; 300; 400; 500; 600) der Flotte ferner eine Trägheitseinheit (137) umfasst, die ausgestaltet ist, einem Mikrocontroller (130) Messungen der Bewegung, Geschwindigkeit und Beschleunigung dieses Roboters zu liefern.

13. System gemäß einem der Ansprüche 1 bis 12, **dadurch gekennzeichnet, dass** jeder Roboter in der Flotte Mittel (139) zur drahtlosen Kommunikation mit den anderen Robotern in der Flotte umfasst.

14. Verfahren zum Steuern eines kollaborativen Systems zum Handhaben einer beliebigen Last gemäß einem der Ansprüche 1 bis 13, welches die Schritte umfasst:
Positionieren der Roboter (100; 200; 300; 400; 500; 600) des Systems von einem Bediener unter der zu handhabenden Last,
Identifizieren jeden Slave-Roboters (200; 300; 400; 500; 600) durch den Master-Roboter (100) und Bestimmen der Position und Ausrichtung jedes der Slave-Roboter,
Senden von Befehlen, Referenzbefehle bezeichnet, von der Hebevorrichtung und den Bewegungselementen des Master-Roboters (100) an den Master-Roboter, und
Bestimmen von Befehlen, abgeleitete Befehle bezeichnet, für die Hebevorrichtung und die Bewegungselemente jedes Slave-Roboters von den Synchronisationsmitteln auf der Grundlage der Referenzbefehle vom Master-Roboter, um eine gemeinsame Handhabung der Last durch den Master-Roboter und die mit dem Master-Roboter synchronisierten Slave-Roboter zu ermöglichen.

## Claims

1. Collaborative system for handling any load (12) on a surface, referred to as a handling surface (11), comprising:
- a fleet of mobile handling robots (100; 200; 300: 400; 500; 600), each comprising a chassis (101), movement members for moving the chassis on said handling surface (11) in a main direction of travel, known as the longitudinal direction, and means for lifting said load carried by said chassis (101) and equipped with a gripping member (111) said load (12),
- a control unit (142) configured to be able to supply a robot in said fleet, known as the master robot (100), with commands, known as reference commands, for said lifting means and said movement members of this robot to enable the handling of said load (12),
- synchronisation means (130, 136, 138, 139) for said robots configured to be able to provide each non-master robot of said fleet, known as a slave robot (200; 300; 400; 500; 600) commands, said derived commands, for said lifting means and said means for moving of said slave robot, determined from said reference commands of said master robot (100), to enable collaborative handling of said load (12) by said master robot (100) and said slave robots (200; 300; 400; 500; 600) synchronised with said master robot,
the system being **characterised in that** said lifting means of at least one handling robot (100) comprise a mobile motorised arm, known as a pivoting arm (110), carrying said gripping member (111), said movable motorised arm (110) being pivotable relative to said chassis (101) about a transverse axis, known as the pivot axis (112), which extends perpendicularly to said longitudinal direction, between a gripping position in which it can position said gripping member (111) under said load (12) and at least one handling position , in which it allows the gripping member (111) to carry said load above said handling surface (11), said pivoting arm (112) of at least one handling robot (100) being configured such that, in the handling position, said gripping member (111) extends vertically over the center of inertia of said movement members of this robot, so as to be able to rotate this robot on itself when said pivoting arm (110) is in said handling position and ensure omnidirectional movement of this robot while maintaining the load, the lifting means of at least one handling robot (100) being synchronised with the movement members of this robot so that the load can be lifted along a perfectly vertical axis .

2. System according to claim 1, **characterised in that** said pivoting arm is configured so that, in the gripping position, said gripping member extends less than 80 mm from said handling surface, advantageously less than 50 mm from said handling surface, so as to allow the load to be gripped closed to the ground.

3. System according to one of claims 1 to 2, **characterised in that** said gripping member (111) of at least one handling robot (100) is mounted pivotally on said motorised arm (110) movable about a transverse axis (113) so as to be able to maintain a horizontal orientation of said gripping member (111) when the movable arm (110) pivots between said load gripping position and a load handling position.

4. System according to one of claims 1 to 3, **characterised in that** said motorised arm (110) of at least one handling robot (100) is equipped with means for removably mounting said gripping member (111) so as to be able to change the gripping member according to the load to be handled by this robot.

5. System according to one of claims 1 to 4, **characterised in that** said movable motorised arm (110) comprises a rotary actuator (115) mechanically connected to a ball screw (120) carried by a bearing (118) mounted so as to pivot relative to said chassis (101) and comprising a nut (119) integral with said pivotable arm (110) so that rotation of said screw (120) by said rotary actuator (115) causes translational movement of said pivot nut (119), which ensures pivoting of said pivotable arm (110).

6. System according to one of claims 1 to 5, **characterised in that** the movement members for moving the chassis of at least one handling robot comprise two drive wheels (102; 103), each controlled independently and arranged on either side of a longitudinal axis.

7. System according to claim 6, **characterised in that** each drive wheel (102; 103) comprises a brushless, frameless motor housed directly in the wheel.

8. System according to one of claims 1 to 7, **characterised in that** the said movement members of at least one handling robot (100) further comprise a roller, known as a front roller (106), carried by the said chassis (101) and arranged opposite the gripping member (111) in the gripping position, and casters, known as rear casters (104; 105), carried by the chassis (101) and arranged opposite the front roller (106).

9. System according to one of claims 1 to 8, **characterised in that** said synchronisation means comprise:
- means for the master robot to determine the position and orientation of each slave robot relative to the master robot and the other slave robots in the system, comprising at least one position sensor (136) and at least one orientation sensor (138) carried by each slave robot,
- means for calculating said derived commands for each slave robot from said position and orientation determined by said determination means, said calculation means being embedded in a microcontroller of the master robot.

10. System according to claim 9, **characterised in that** the position of each robot relative to the master robot and the other slave robots in the system is determined by triangulation or trilateration.

11. System according to one of claims 19 or 10, **characterised in that** said synchronisation means are configured to be able to measure, at a predetermined time interval, during the movement of said load (12) by said fleet of robots, the balance of the load by measuring the distance between each robot (100; 200; 300; 400; 500; 600) during the movement of said load (12) and the distribution of weight between each robot as a function of the vertical movements of each robot, compensated by an action on said lifting means.

12. System according to one of claims 1 to 11, **characterised in that** each robot (100; 200; 300; 400; 500; 600) of said fleet further comprises an inertial unit (137) configured to provide a microcontroller (130) with measurements of the movement, speed and acceleration of that robot.

13. System according to one of claims 1 to 12, **characterised in that** each robot in said fleet comprises means (139) for wireless communication with the other robots in said fleet.

14. Method for controlling a collaborative system for handling any load according to one of claims 1 to 13, comprising the following steps:
- the robots (100; 200; 300; 400; 500; 600) of said system are positioned by an operator under said load to be handled,
- said master robot (100) identifies each slave robot (200; 300; 400; 500; 600) and determines the position and orientation of each of said slave robots,
- commands, known as reference commands, from said lifting means and said movement members of the master robot (100) are sent to the master robot,
- commands, known as derived commands, for said lifting means and said movement members of each slave robot are determined by said synchronisation means, based on said reference commands from said master robot, to enable collaborative handling of said load by said master robot and said slave robots synchronised with said master robot.
